# EUROPEAN PATENT APPLICATION

(11) **EP 2 192 574 A1**
(43) Date of publication of application: **02.06.2010**
(21) Application number: 08834162.3
(22) Date of filing: 25.09.2008
(51) Int. Cl.: G10K 15/02, H04N 7/173

(54) **CONTENT REPRODUCING APPARATUS**

(30) Priority: 28.09.2007 JP 2007254081
(71) Applicant: Kabushiki Kaisha Kenwood, Hachiouji-shi, Tokyo 192-8525 (JP)
(72) Inventor: MASHITA, Yoshihisa, Kodaira-shi Tokyo 187-0031 (JP); YOSHIDA, Tomoaki, Hino-shi Tokyo 191-0055 (JP); WATANABE, Masahito, Sagamihara-shi Kanagawa 228-0802 (JP); TABATA, Kiyofumi, Fujimi-shi Saitama 354-0032 (JP)
(74) Representative: Kraus, Jürgen Helmut
(86) International application number: PCT/JP2008/067224
(87) International publication number: WO 2009/041454

(57) **Abstract**

A content reproducing apparatus comprises a server monitoring means for monitoring the connection status of a server existing on a network; a content information acquiring means for acquiring information of the contents on public view at the server; and a content reproducing means for reproducing the contents on public view at the server. When detecting a server connected to a network, the content reproducing apparatus acquires information of the contents on public view at the server, and automatically reproduces the contents on public view at the server based on the acquired information of the contents. The content reproducing apparatus is provided which can reproduce the contents on public view at DMSes on a network without requiring any troublesome operations.

## Description

### TECHNICAL FIELD

The present invention relates to a content reproducing apparatus capable of reproducing digital contents, and particularly provides a content reproducing apparatus which is improved to reproduce digital contents provided from a server connected to a network.

### BACKGROUND ART

In recent years, network systems (for example, a local area network (LAN: Local Area Network) have been proposed which connect AV apparatuses, personal computers, personal digital electronics and the like to one another via a hub, router or the like so that hardware resources or software resources can be shared by them. For example, a technical specification for the network system has been developed by the DLNA (Digital Living Network Alliance). Hereinafter, an apparatus in conformity with the specifications (DLNA guideline) developed by the DLNA will be called a DLNA-compatible apparatus.

As DLNA-compatible apparatuses, there are an apparatus which stores digital contents such as a still image, a moving image, music and the like (hereinafter called a DMS (Digital Media Server)) and an apparatus which reproduces digital contents provided by the DMS (hereinafter called a DMP (Digital Media Player)), and the like.

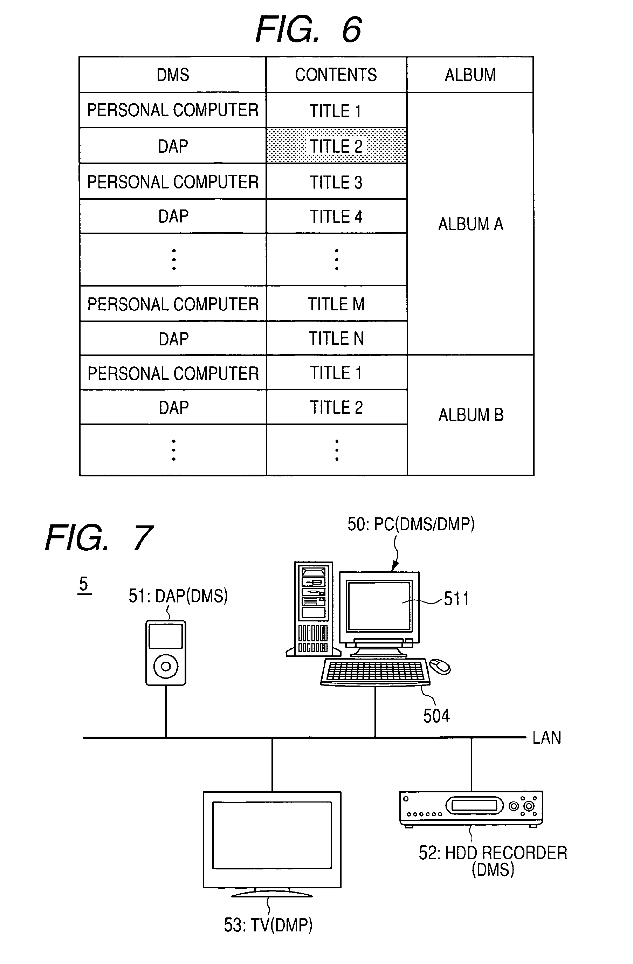

FIG. 7 is an explanatory view showing one example of a network configuration which connects a plurality of DLNA-compatible apparatuses via a LAN.

As shown in FIG., 7, for example, a personal computer (hereinafter, called a personal computer) 50, a digital audio player (DAP) 51, an HDD recorder 52 and the like can be DMSs. Further, for example, the personal computer 50, a television receiver 53 and the like can be DMPs.

In the network system 5 in which such DLNA-compatible apparatuses are connected, for example, video contents stored in the HDD recorder 52 can be reproduced by the television receiver 53 and the personal computer 50 (DMP), and the music content stored in the DAP 51 can be reproduced by the personal computer 50.

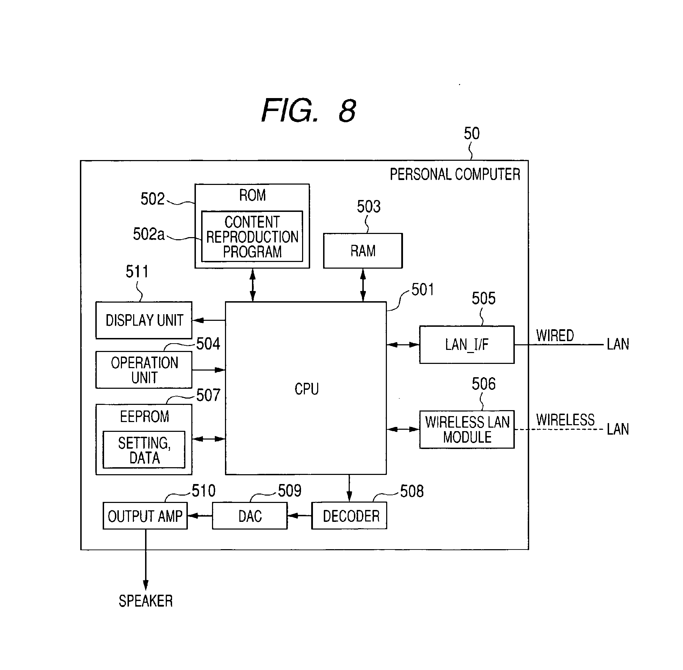

FIG. 8 is a block diagram showing one example of a configuration of a main part of the personal computer 50 as the conventional music content reproducing apparatus.

As shown in FIG. 8, the personal computer 50 is configured by including a CPU 501, a ROM 502, a RAM 503, an operation unit (a keyboard, a mouse) 504, a LAN interface 505, a wireless LAN module 506, an EEPROM 507, a decoder 508, a DAC 509, an output amplifier 510, a display unit 511 and the like.

In the personal computer 50, the CPU 501 reproduces music contents which are on public view at a DMS (DAP 51) on a network by executing the content reproducing program 502a which is stored in the ROM 502.

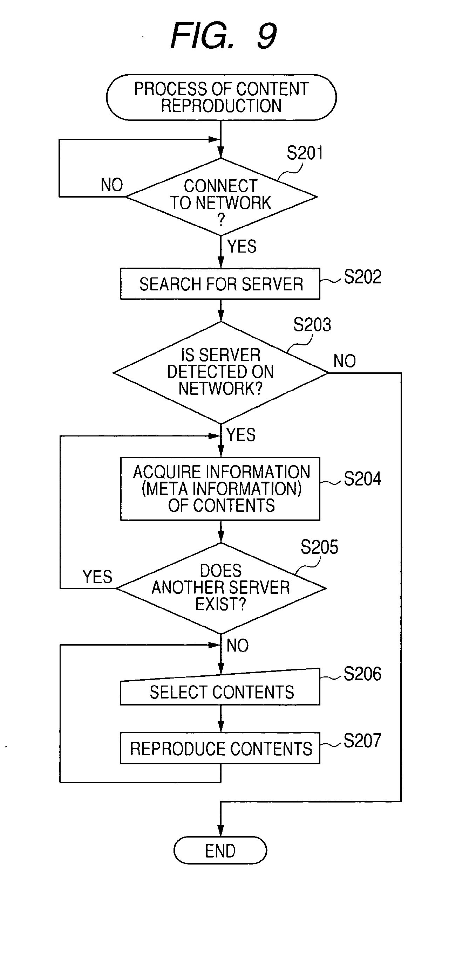

In concrete, the reproduction processing of music contents is performed according to a flowchart of FIG. 9.

FIG. 9 is a flowchart showing one example of the content reproduction processing executed by the personal computer 50.

In step S201, it is determined whether the personal computer 50 is connected to the network. For example, when the link is established by the LAN interface 505 or the wireless LAN module 506, it is determined that the personal computer 50 is connected to the network. When it is determined that the personal computer 50 is connected to the network, the flow goes to step S202.

In step S202, the DMS on the network to which the personal computer 50 is connected is searched for. If they are DLNA-compatible apparatuses, they can be connected to each other only by being connected to the network without a special setting, and can share contents. Accordingly, if the personal computer 50 is connected to the network, the personal computer 50 is brought into a status communicable with the DMS which is already connected to the network, and what DMS is connected onto the network at present can be easily searched for.

In step S203, it is determined whether the DMS on the network is detected as a result of the search in step S202. When the DMS on the network is detected, the flow goes to step S204, whereas when the DMS is not detected, the processing is finished.

In step S204, the information (meta information) of the contents which are on public view at one of the DMSs (for example, the DAP 51) on the network is acquired. The information of the contents includes, for example, the kind of the contents (a moving image, a still image, music), the content names and the like. When the personal computer 50 is used as a music content reproducing apparatus, only the information of the music contents is acquired.

In step S205, it is determined whether another DMS the contents information of which is not acquired yet exists on the network. When it is determined that another DMS exists, the flow goes to step S204, and the information of the contents on public view at the DMS is acquired. Meanwhile, when it is determined that another DMS does not exist, the flow goes to step S206.

In step S206, the user is allowed to select the music contents to be reproduced. In concrete, the information of the music contents (for example, the title name and the album name) is displayed in a list form on the display unit 511. In the list display of the music content, the user moves the focus by operating the operation unit 504 or the like to select and determine the desired music content.

In step S207, the music contents selected in step S206 are reproduced. In concrete, the music data is requested of the DMS which holds the selected music contents. The decoder 508 and the DAC 509 perform predetermined signal processing for the music data transmitted from the DMS for the request and generate analog sound signals. The generated analog sound signals are amplified by the output amplifier 510 to output the analog sound signals to a speaker or the like, and the sound based on the analog sound signals is outputted from the speaker.

As shown in the personal computer 50 as the conventional music content reproducing apparatus, the list of the music contents which are on public view at the DMS is displayed on the display unit 511, and desired music contents are selected from the list, whereby the music contents are reproduced.

More specifically, in the conventional content reproducing apparatus (DMP), the list of the contents on public view at a DMS needs to be displayed, and the contents to be reproduced needs to be selected from the list. Therefore, the display unit 511 becomes essential.

Further, as the content reproducing technique using a network, an art is disclosed, which enables reproduction of the same contents simultaneously in a plurality of terminals connected to the network (for example, Patent Document 1).
Patent Document 1: Japanese Patent Application Laid-Open No. 2007-13705

### DISCLOSURE OF THE INVENTION

### PROBLEMS TO BE SOLVED BY THE INVENTION

Recently, a mini component stereo system and the like have been able to reproduce the music contents which are on public view at the DMS on a network. However, in the mini component stereo system, a display unit for displaying the list of the contents is essential. Since the display unit desirably displays a relatively plenty of information (list of a plurality of contents), a liquid crystal panel or the like is adopted for the display unit in many cases.

Further, when the number of contents on public view at a DMS is enormous, it is not easy to search for a desired content from them, and therefore, there is the fear of inevitably complicating a UI (User Interface).

As above, when the content reproducing apparatus such as a mini component stereo system is to be effectively used on a network like this, the cost increase of the apparatus becomes unavoidable.

Further, until after a content is selected and determined by the user, the content is not reproduced, and therefore, the conventional approach lacks convenience.

Meanwhile, from the viewpoint of the user, if only the contents which are desired to be reproduced, or only the contents which are frequently reproduced are made on public view at the DMS, necessity of selecting the contents to be reproduced at the content reproducing apparatus side sometimes does not especially occur. For example, when the user reproduces music as BGM, for example, if only the music is in the category which the user likes, the user often does not mind the title of the music.

An object of the present invention is to provide a content reproducing apparatus which reproduces contents which are on public view at a DMS on a network, and which is a content reproducing apparatus which can reproduce the contents without requiring any troublesome operations.

### MEANS FOR SOLVING THE PROBLEMS

In order to attain the above described object of the invention, a content reproducing apparatus of the present invention basically includes server monitoring means for monitoring a connection status of a server existing on a network, content information acquiring means for acquiring information of contents on public view at the aforesaid server, and content reproducing means for reproducing the contents on public view at the aforesaid server. When a server connected to a network is detected by the aforesaid server monitoring means, the aforesaid content information acquiring means operates to acquire information of the contents on public view at the server, and the aforesaid content reproducing means operates to reproduce the contents on public view at the aforesaid server based on the information of the contents acquired by the aforesaid content information acquiring means.

In the content reproducing apparatus of the present invention, content managing means for managing a reproduction order of a plurality of contents on public view at the aforesaid server based on the information of the contents acquired by the aforesaid content information acquiring means, and when a server connected to a network is detected by the aforesaid server monitoring means, the aforesaid content information acquiring means operates to acquire information of contents on public view at the server, the aforesaid content managing means operates to sort a reproduction order of the contents according to a predetermined condition, and the aforesaid content reproducing means operates to reproduce the aforesaid contents according to the reproduction order sorted by the aforesaid content information managing means.

In a certain embodiment of the present invention, in the content reproducing apparatus, when a plurality of servers are detected by the aforesaid server monitoring means, the aforesaid content managing means operates to sort a reproduction order of the contents at a time point when content information has been acquired from all servers by the aforesaid content information acquiring means, and while the aforesaid content reproducing means operates to reproduce the contents on public view at the server at a time point when content information has been acquired from a first server by the aforesaid content information acquiring means, the aforesaid content reproducing means operates to reproduce the aforesaid contents according to the reproduction order sorted by the aforesaid content managing means after the content information is acquired from all the servers by the aforesaid content information acquiring means.

In another embodiment of the present invention, in the content reproducing apparatus, when disconnection of the server connected to the network is detected by the aforesaid server monitoring means, the aforesaid content managing means operates to delete the information of the contents on public view at the server, and re-sort a reproduction order with respect to remaining contents.

Preferably, in the content reproducing apparatus, when a power is turned on, the aforesaid server monitoring means operates to start to monitor a connection status of the server existing on the network.

Preferably, in the content reproducing apparatus, the aforesaid content reproducing means is configured to be able to reproduce music contents, and the aforesaid content information acquiring means operates to acquire only information of music contents on public view at the aforesaid server.

Preferably, the content reproducing apparatus is configured not to include a display unit for displaying the information of the contents acquired by the aforesaid content information acquiring means.

Preferably, in the content reproducing apparatus, alert means notifying with voice that the server connected to the network is not detected by the aforesaid server monitoring means, or that the server connected to the network does not have music contents on public view, when the server connected to the network is not detected by the aforesaid server monitoring means, or when the server connected to the network does not have the music contents on public view.

### EFFECT OF THE INVENTION

According to the present invention, a content reproducing apparatus which reproduces contents on public view at a server on a network, and is a content reproducing apparatus which can reproduce contents without requiring any troublesome operations can be provided.

Further, by only turning on the power of the content reproducing apparatus, the information of the contents on public view at the server on the network is automatically collected and reproduced, and therefore, the UI can be extremely simplified without necessity of including a display unit. Accordingly, the cost of the content reproducing apparatus can be significantly reduced.

### BRIEF DESCRIPTION OF THE DRAWINGS

FIG. 1 is an explanatory view showing a schematic configuration of a network system 1 according to the present embodiment;
FIG. 2 is a block diagram showing one example of a configuration of an essential part of an audio amplifier 10;
FIG. 3 is a flowchart showing one example of content reproducing processing in the audio amplifier 10;
FIG. 4 is an explanatory view showing one example of a data configuration of information of music contents transmitted from a DAP 11;
FIG. 5 is an explanatory view showing one example of a data configuration of information of music contents transmitted from a personal computer 12;
FIG. 6 is an explanatory view showing one configuration example of a database stored in a RAM 103;
FIG. 7 is an explanatory view showing one example of a network configuration in which a plurality of DLNA-compatible apparatuses are connected via a LAN;
FIG. 8 is a block diagram showing one example of a configuration of an essential part of a conventional audio amplifier 50; and
FIG. 9 is a flowchart showing one example of content reproducing processing executed in the conventional audio amplifier 50.

### DESCRIPTION OF SYMBOLS

- 1: NETWORK SYSTEM
- 10: AUDIO AMPLIFIER (CONTENT REPRODUCING APPARATUS)
- 11: DIGITAL AUDIO PLAYER (DAP)
- 12: PERSONAL COMPUTER

### BEST MODE FOR CARRYING OUT THE INVENTION

Hereinafter, an embodiment of the present invention will be described based on the drawings.

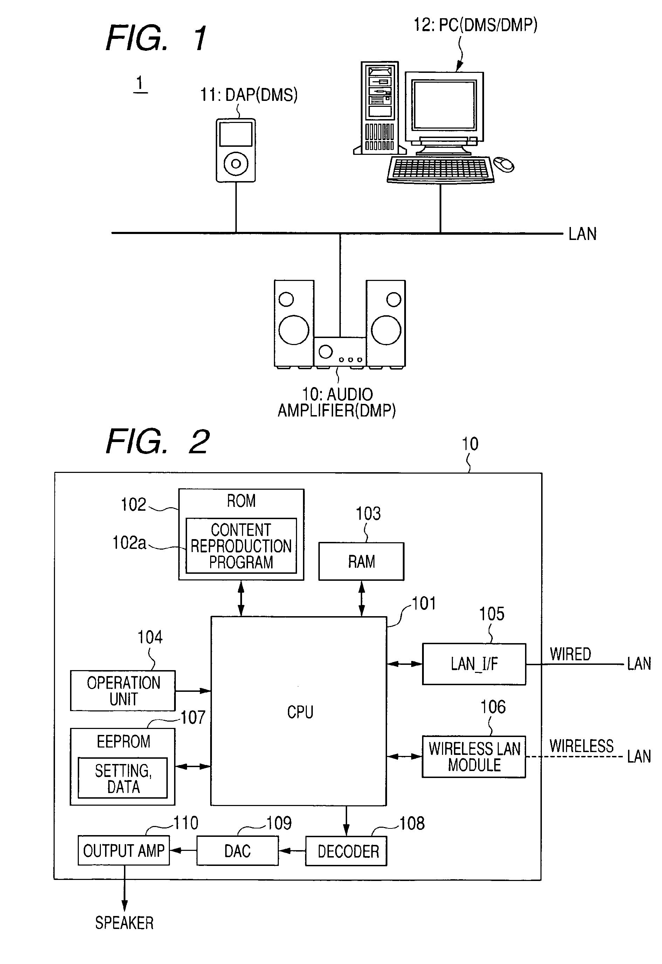

FIG. 1 is an explanatory view showing a schematic configuration of a network system 1 according to the present embodiment. In the present embodiment, an example is shown, which applies the content reproducing apparatus according to the present invention to an audio amplifier 10 which can reproduce music contents.

As shown in FIG. 1, the network system 1 is configured by connecting the audio amplifier 10, a digital audio player (hereinafter, called a DAP) 11, a personal computer (hereinafter, called a personal computer) 12 and the like to a LAN via, for example, a hub or a router (not illustrated).

Though not illustrated, apparatuses such as an HDD recorder, a television receiver, and a printer can be connected to the network 1 in addition to the audio amplifier 10, the DAP 11 and the personal computer 12.

In the present embodiment, as the audio amplifier 10, the DAP 11 and the personal computer 12, apparatuses in conformity with the DLNBA guideline (so-called DNLA-compatible apparatuses) are adopted.

Namely, the DAP 11 and the personal computer 12 function as the DMSs which have music contents on public view on the network, and the audio amplifier 10 functions as the DMP which reproduces the music contents which are on public eye at DMSs 11 and 12 on the network. The personal computer 12 also functions as the DMP on the network.

In the DLNA guideline, the connection conditions are developed based on UPnP among apparatuses to which the apparatuses should commonly conform, such as media formats (JPEG, LPCM, MPEG2), media transfer (HTTP), communication protocol (IPv4), and network connectivity (wired LAN, wireless LAN). The DLNA-compatible apparatuses can be connected to one another without a special setting and can share contents, by being simply connected to the network.

Accordingly, when the DAP 11 and the personal computer 12 are connected to the network, and the audio amplifier 10 is connected to the network, they are brought into a status communicable with each other. The music contents that are on public view at the DAP 11 and the personal computer 12, which are DMSs, can be reproduced by the audio amplifier 10 which is a DMP.

FIG. 2 is a block diagram showing an example of the configuration of the essential part of the audio amplifier 10.

As shown in FIG. 2, the audio amplifier 10 is configured by including a CPU 101, a ROM 102, a RAM 103, an operation unit 104, a LAN interface 105, a wireless LAN module 106, an EEPROM 107, a decoder 108, a DAC 109 and an output amplifier 110.

The CPU 101 executes various kinds of programs which are stored in the ROM 102 according to the input signal or the like which is inputted into the CPU 101 from each of the units of the audio amplifier 10, and controls each unit of the content reproducing apparatus 10.

For example, when the power supply of the audio amplifier 10 is turned on, the CPU 101 searches for the DMS connected to a network, and reproduces a predetermined music content from the music contents on public view at the detected DMS.

The ROM 102 is configured by a nonvolatile semiconductor memory which is writable and erasable such as a flash memory, for example, and stores various programs for executing processing by the CPU 101. The ROM 102 stores a content reproducing program 102a and the like for reproducing music contents that are on public view at the DMS on the network, for example.

The RAM 103 is configured by a volatile memory, and stores a processing result which occurs when various programs are executed by the CPU 101, the inputted data and the like in the work area. For example, the RAM 103 stores the information (meta information) of the music contents on public view at the DMS on the network. Based on the information of the music contents, the order of reproduction of the contents is sorted. The information indicating the reproduction order after sort is stored in the RAM 103.

The operation unit 104 is configured by an operation button which is provided at a front of a main body and for selecting a content to be reproduced. Further, the operation unit 104 may be configured to have a remote control signal receiving unit which receives a remote control signal from a remote control apparatus. The audio amplifier 10 can reproduce the music contents on public view at the DMS on the network without requiring any complicated operations, and therefore, the configuration of the operation unit 104 can be made extremely simple. For example, an operation button for regulating the output volume, and for skipping the contents to be reproduced by the unit of a piece of music or the unit of an album.

The LAN interface 105 is an interface for connecting the content reproducing apparatus 10 to the network via the LAN cable, and enables data transmission and reception to and from the DMSs 11 and 12 which are connected to a network.

The wireless LAN module 106 is a module for wirelessly connecting the content reproducing apparatus 10 to the network, and enables data transmission and reception from and to the DMSs 11 and 12 connected to the network. For example, the wireless LAN module 106 connects to the network via a wireless LAN access point (not illustrated) connected to the network.

The EEPROM 107 is configured by a writable/erasable nonvolatile semiconductor memory, and stores data or the like used at the time of reproducing the contents. For example, when the information of the contents is acquired from the DMS on the network, the conditions for sorting the reproduction order (for example, the order of name of a piece of music, the order of the name of the piece of music according to the albums and the like through all the contents). The ROM 102 and the EEPROM 107 may be configured by one storage apparatus instead of separately providing the ROM 102 and the EEPROM 107.

The decoder 108 decodes the music data (for example, the LPCM format) of the contents provided from the DMS, and generates digital music signals.

The DAC 109 coverts the digital music signals into analog music signals.

The output amplifier 110 amplifies the analog music signals and outputs them to a speaker or the like.

More specifically, the data of the music contents on public view at the DMS is directly reproduced without being stored in the audio amplifier 110 (streaming reproduction).

As described above, the audio amplifier 10 of the present embodiment is characteristic in the point that the audio amplifier 10 does not include the display unit included by a conventional ordinary audio amplifier.

The audio amplifier 10 automatically reproduces the music contents on public view at the DMS according to a predetermined order. Therefore, no problem occurs even if the audio amplifier 10 does not include a display unit for performing, for example, list display of a plurality of contents which are on public view at the DMS and selecting the content to be reproduced. Further, the audio amplifier 10 is for exclusively reproducing music contents, and therefore, it does not have to include the display unit originally. Thereby, the apparatus cost of the audio amplifier 10 can be significantly reduced.

As the DAP 11 and the personal computer 12 which are connected to the network, those generally distributed can be used. Briefly describing, the DAP 11 and the personal computer 12 each can include a storage apparatus such as a hard disk for storing music contents, a network connecting unit for connecting to the network, and means for realizing the DMS function of having the music contents stored in the storage apparatus on public view to the DMP on the network.

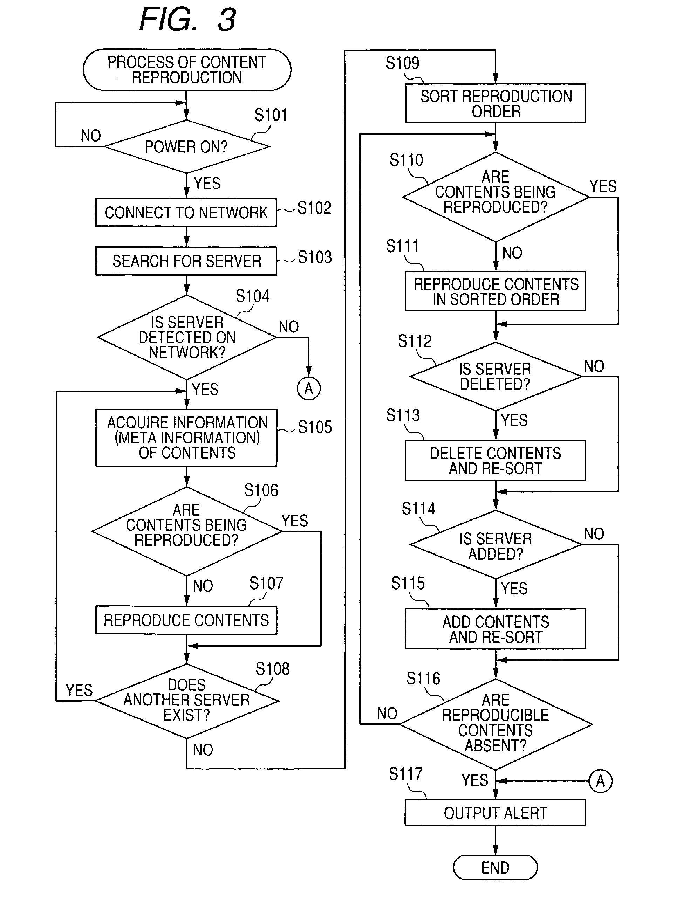

FIG. 3 is a flowchart showing one example of content reproducing processing in the audio amplifier 10. The content reproducing processing is realized by the CPU 101 executing the content reproducing program 102a in the ROM 102.

In step S101, it is determined whether the power of the audio amplifier 10 is turned on or not. When it is determined that the power of the audio amplifier 10 is be turned on, the flow goes to step S102. Specifically, in the present embodiment, content reproduction processing proceeds with turning on the power of the audio amplifier 10 as a start.

In step S102, the audio amplifier 10 is connected to the network. For example, when the link is established by the LAN interface 105 or the wireless LAN module 106, it is determined that the audio amplifier 10 is connected to the network. When the audio amplifier 10 connects the network, the flow goes to step S103.

In step S103, the DMS on the network to which the audio amplifier 10 is connected is searched for. The audio amplifier 10 is a DLNA-compatible apparatus, and therefore, if a DLNA-compatible apparatus (for example, the DAP 11 or the personal computer 12) which can be a DMS is connected to the network, the audio amplifier 10 can easily detect them. When a plurality of DMSs exist on the network, all the DMSs are detected.

In step S104, it is determined whether the DMS on the network is detected as a result of search of step S103. When the DMS on the network is detected, the flow goes to step S105. Meanwhile, when the DMS is not detected, the flow goes to step S117, and a voice alert notifying that the DMS does not exist on the network is outputted.

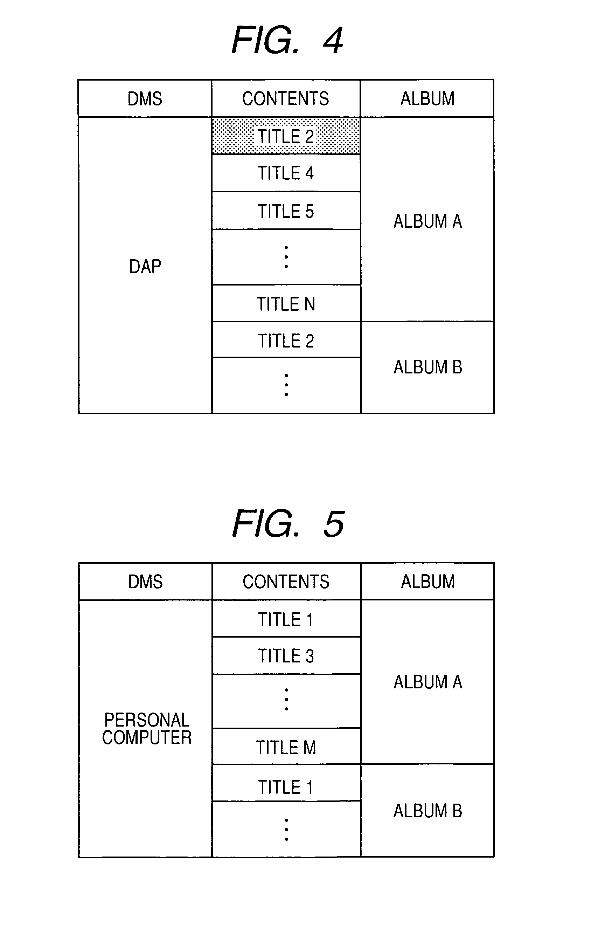

In step S105, the information (meta information) of the contents which are on public view at one (for example, the DAP 11) of the detected DMSs on the network is acquired, and is stored in the RAM 103. In concrete, the information of the contents is requested of the DAP 11 from the audio amplifier 10, and the information of the contents is transmitted from the DAP 11 in response to this. Therefore, the information is stored in the RAM 103 (see FIG. 4). The audio amplifier 10 can reproduce only music contents, and therefore, acquires only the information of music contents.

FIG. 4 is an explanatory view showing one example of a data configuration of the information of music contents transmitted from the DAP 11.

FIG. 4 shows that the DAP 11 has the music contents (title 2, title 4, title 5, ... title N) which are recorded in album A, and the music contents (title 2, ...) which are recorded in album B, on public view. Further, FIG. 4 shows that in the DAP 11, a plurality of music contents are classified according to the albums, and are further arranged in ascending numeric order in the albums into which they are classified. The arrangement of the music contents is not limited to this, and can be set for each DMS.

FIG. 4 shows only the content names (names of pieces of music) and the names of the albums in which the pieces of music are recorded out of the information of the music contents, but the content information includes the names of artists, the categories, the kind of contents (a moving image, a still image, music) and the like besides them. Based on the information of the music contents, the reproduction order of the contents is sorted.

When the information of the contents is acquired from the DMS in step S105 of FIG. 3, it is determined whether music contents are being reproduced at present in step S106. When it is determined that the music contents are being reproduced, the flow goes to step S108, and when it is determined that the music contents are not reproduced (specifically, the status in which the contents are not reproduced after the power is turned on), the flow goes to step S107.

In step S107, based on the information of the music contents which is acquired, the music contents on public view at the DMS (for example, the DAP 11) are reproduced. At this time, according to the order of arrangement of the information of the music contents provided from, for example, the DAP 11, the music content which is reproduced first is determined. Specifically, when the information of the music contents shown in FIG. 4 is provided, the music content (half-tone dot meshing in FIG. 4) of title 2 of album A is reproduced.

In concrete, the music data of title 2 of album A is requested of the DAP 11. In the decoder 108 and the DAC 109, predetermined signal processing is applied to the music data transmitted from the DAP 11 in response to this request to generate analog sound signals. Subsequently, the generated analog sound signals are amplified by the output amplifier 110 and are outputted to a speaker or the like, and the sound based on the analog sound signals is outputted from the speaker.

More specifically, when the information of the music contents is acquired from one of the DMSs on the network, one of the music contents on public view at the DMS is immediately reproduced.

In step S108, it is determined that another DMS the music contents information of which is not acquired yet exists on the network. When it is determined that another DMS exists, the flow goes to step S105, and the information of the music contents on public view at the DMS is acquired. Meanwhile, when it is determined that another DMS does not exist, the flow goes to step S109.

For example, in the network system 1 shown in FIG. 1, the personal computer 12 exists as the DMS other than the DAP 11. Therefore, the flow goes to step S105, and the information of the music contents on public view at the personal computer 12 is acquired. In concrete, from the audio amplifier 10, the information of the contents is requested of the personal computer 12, and the information of the contents is transmitted from the personal computer 12 in response to this. Therefore, the information is stored in the RAM 103 (see FIG. 5).

FIG. 5 is an explanatory view showing one example of the data configuration of the information of the music contents transmitted from the personal computer 12.

FIG. 5 shows that the personal computer 12 has the music contents (title 1, title 3, ... title M) recorded in album A, and the music contents (title 1, ...) recorded in album B on public view. Further, FIG. 5 shows that in the personal computer 12, a plurality of music contents are classified according to the albums, and are further arranged in ascending numeric order in the albums into which they are classified.

As above, the RAM 103 stores the information of the music contents which are on public view at each DMS. At a time point when the information of the contents of all the DMSs on the network has been acquired, the reproduction order which will be described later is sorted.

When it is determined that another DMS does not exist (more specifically, the information of the contents is acquired from all the DMSs) in step S108 of FIG. 3, the order of reproduction is sorted based on the acquired information of all the music contents in step S109. For example, the database in which reproducible music contents are arranged according to a predetermined reproduction order is generated, and is stored in the RAM 103. At this time, the reproduction order shall be in conformity with the preset conditions. For example, after a plurality of music contents are classified according to albums, artists or categories, they are sorted in the order of the names of pieces of music. The conditions are stored in, for example, the EEPROM 107, and the user can change the conditions by operating the operation unit 104.

FIG. 6 is an explanatory view showing one configuration example of the database stored in the RAM 103. FIG. 6 shows the case in which all the contents are classified according to albums, and the reproduction order is sorted in ascending numeric order of the title names when the information of the contents shown in FIGS. 4 and 5 is acquired in step S105. Title 2 of album A shown by half-tone dot meshing in FIG. 6 is the content which is being reproduced at present (the content reproduced in step S107).

More specifically, according to the reproduction order shown in FIG. 6, the music contents are reproduced in the order of title 1, title 2, ... title M, and title N of album A, and thereafter, are reproduced in the order of title 1, title 2, ... of album B in the audio amplifier 10.

When the reproduction order of the contents is sorted in step S109 of FIG. 3, it is determined whether the music contents are being reproduced at present in step S110. When it is determined that the music contents are being reproduced, the flow goes to step S112, whereas when the music contents are not being reproduced, the flow goes to step S113.

In step S111, the music contents are reproduced according to the reproduction order sorted in step S109. At this time, the music contents may be reproduced in order from the first piece of music according to the sorted reproduction order (reproduce the music contents from title 1 of album A in FIG. 6), or may be reproduced in order from the next piece of music of the music contents (title 3 of album A in FIG. 6) with the music content reproduced before sort (title 2 of album A in FIG. 6) in step S107 as the reference.

In step S112, it is determined whether the DMS on the network is deleted (disconnected from the network). The audio amplifier 10 is a DLNA-compatible apparatus, and always monitors the connection status of the DLNA-compatible apparatus (for example, the DAP 11 or the personal computer 12) which can be a DMS to the network. Therefore, the audio amplifier 10 can easily detect whether or not the DMS is deleted.

When it is determined that the DMS on the network is deleted, the flow goes to step S113, and when it is determined that the DMS on the network is not deleted, the flow goes to step S114.

In step S113, the information of the contents which has been on public view by the deleted DMS is deleted, and the reproduction order of the contents is re-sorted. Thereby, only the music contents on public view at the effective DMS can be accurately grasped, and therefore, the problem of the DMS holding the music contents to be reproduced being absent on the network and the music contents becoming incapable of being reproduced can be avoided.

In step S114, it is determined whether a new DMS is added (connected to the network) on the network. The audio amplifier 10 is a DLNA-compatible apparatus, and always monitors the connection status of the DLNA-compatible apparatus (for example, the DAP 11 or the personal computer 12) which can be a DMS to the network. Therefore, the audio amplifier 10 can easily detect that a new DMS is added.

When it is determined that a DMS is added on the network, the flow goes to step S115, whereas when it is determined that a DMS is not added on the network, the flow goes to step S116.

In step S115, the information of the music contents on public view by the added DMS is acquired, and the reproduction order of the contents is re-sorted. Thereby, when a DMS is added on the network, the music contents on public view at the added DMS become reproducible, and therefore, the music contents on public view on the network can be effectively used.

In step S116, it is determined whether the reproducible contents are present. When it is determined that the reproducible contents are present, the flow goes to step S110, and the content reproduction processing is continued. Meanwhile, when it is determined that reproducible contents are absent, the flow goes to step S117.

In step S117, a voice alert indicating that reproducible contents are not on public view at the DMS on the network is outputted. The audio amplifier 10 does not include a display unit capable of displaying information, and therefore, when music contents are not on public view on the network, it is effective to notify with voice to a user. Thereby, a user does not worry about a failure of the apparatus for the lapse of time without reproduction of music contents.

As above, the audio amplifier 10 according to the present embodiment includes server monitoring means for monitoring the connection status of the DMS existing on the network (step S104, step S112, step S114), content information acquiring means for acquiring the information of the contents on public view at the DMS (step S105, step S115), and content reproducing means for reproducing the contents on public view at the DMS (step S107, S111).

When the DMS connected to the network is detected, the audio amplifier 10 acquires the information of the contents on public view at the DMS, and reproduces the contents on public view at the DMS based on the information of the acquired contents.

Thereby, the user can reproduce the music contents on public view on the network without needing to perform any troublesome operations.

Further, the audio amplifier 10 includes content managing means for managing the reproduction order of a plurality of contents on public view at a DMS based on the acquired information of the contents (steps S109, S113 and S115).

When the DMS connected to the network is detected, the audio amplifier 10 acquires the information of the music contents on public view at the DMS, sorts the reproduction order of the music contents according to the predetermined conditions, and reproduces the music contents based on the sorted reproduction order.

Thereby, the user can reproduce the music contents on public view on the network in the reproduction order properly sorted, without needing to perform any troublesome operations.

Further, when the power is turned on, the audio amplifier 10 automatically corrects the information of the music contents on public view at the DMS on the network and reproduces the music contents. Thereby, the audio amplifier 10 does not have to include the display unit, and therefore, the UI can be extremely simplified. Accordingly, the cost of the audio amplifier 10 can be dramatically reduced.

Further, when a plurality of DMSs are detected on the network after the power of the audio amplifier 10 is turned on, at a time point when the information of the contents has been acquired from the first DMS, the audio amplifier 10 reproduces the music contents held by the DMS (step S107). Subsequently, at a time point when the information of the contents is acquired from all the DMSs on the network, the reproduction order of the contents is sorted (step S109), and thereafter, reproduces the music contents according to the sorted reproduction order.

Accordingly, as soon as reproducible music contents are found, the music contents are reproduced, and a user can be prevented from feeling dissatisfaction against the lapse of time without reproduction of the music contents after the power is turned on.

Meanwhile, among the music contents on public view by the DMS, there is sometimes relevancy among the contents (for example, in the album recording a live, MC between pieces of music is recorded as one content). In order to be adapted to such a case, reproduction of the music contents may be started after the information of the music contents on public view at all the DMSs is acquired and the reproduction order is sorted.

The invention made by the present inventor is concretely described above based on the embodiment, but the present invention is not limited to the above described embodiment, and can be changed within the scope without departing from the spirit of the invention.

For example, in the above described embodiment, when the reproducible contents are absent, the content reproduction processing is finished by outputting alert with voice, but the DMS on the network may be searched for again after a predetermined time elapses thereafter, or the power of the audio amplifier 10 may be turned off.

Further, the conditions at the time of sort of the reproduction order of the music contents on public view at the DMS are not limited to those shown in the above described embodiment. For example, after the music contents are classified according to artists, and categories, they may be sorted in the ascending numerical order/descending numerical order of the title names.

In the above described embodiment, the example of application of the content reproducing apparatus according to the present invention to the audio amplifier 10 is shown, but the content reproducing apparatus can be applied to a television receiver, a media player and the like which can reproduce video contents. In this case, the content reproducing apparatus includes a display unit.

The embodiment disclosed this time should be considered in all respects to be illustrative but not to be restrictive. The scope of the present invention is not shown by the above description, but by claims, and is intended to include the equivalents to claims and all modifications within the scope of claims.

## Claims

1. A content reproducing apparatus, comprising:
server monitoring means for monitoring a connection status of a server existing on a network;
content information acquiring means for acuiring information of contents on public view at said server; and
content reproducing means for reproducing the contents on public view at said server,
wherein when a server connected to a network is detected by said server monitoring means,
said content information acquiring means operates to acquire information of the contents on public view at the server, and
said content reproducing means operates to reproduce the contents on public view at said server based on the information of the contents acquired by said content information acquiring means.

2. The content reproducing apparatus according to claim 1, further comprising:
content managing means for managing a reproduction order of a plurality of contents on public view at said server based on the information of the contents acquired by said content information acquiring means,
wherein when a server connected to a network is detected by said server monitoring means,
said content information acquiring means operates to acquire information of contents on public view at the server,
said content managing means operates to sort a reproduction order of the contents according to a predetermined condition, and
said content reproducing means operates to reproduce said contents according to the reproduction order sorted by said content information managing means.

3. The content reproducing apparatus according to claim 2,
wherein when a plurality of servers are detected by said server monitoring means,
said content managing means operates to sort a reproduction order of the contents at a time point when content information has been acquired from all servers by said content information acquiring means, and
while said content reproducing means operates to reproduce the contents on public view at the server at a time point when content information has been acquired from a first server by said content information acquiring means, said content reproducing means operates to reproduce said contents according to the reproduction order sorted by said content managing means after the content information is acquired from all the servers by said content information acquiring means.

4. The content reproducing apparatus according to claim 2 or 3,
wherein when disconnection of the server connected to the network is detected by said server monitoring means,
said content managing means operates to delete the information of the contents on public view at the server, and re-sort a reproduction order with respect to remaining contents.

5. The content reproducing apparatus according to claim 1, 2 or 3,
wherein when a power is turned on, said server monitoring means operates to start to monitor a connection status of the server existing on the network.

6. The content reproducing apparatus according to claim 1, 2 or 3,
wherein said content reproducing means is configured to be able to reproduce music contents, and
said content information acquiring means operates to acquire only information of music contents on public view at said server.

7. The content reproducing apparatus according to claim 6, which is configured not to include a display unit for displaying the information of the contents acquired by said content information acquiring means.

8. The content reproducing apparatus according to claim 7, further comprising alert means notifying with voice that the server connected to the network is not detected by said server monitoring means, or that the server connected to the network does not have music contents on public view, when the server connected to the network is not detected by said server monitoring means, or when the server connected to the network does not have music contents on public view.
